# EUROPÄISCHE PATENTSCHRIFT

(11) **EP 1 663 762 B1**
(45) Veröffentlichungstag und Bekanntmachung des Hinweises auf die Patenterteilung: **23.05.2007**
(21) Anmeldenummer: 04764588.2
(22) Anmeldetag: 28.08.2004
(51) Int. Cl.: B62D 11/04

(54) **ELEKTRISCHES ANTRIEBSSYSTEM FÜR EIN FAHRZEUG MIT RUTSCHLENKUNG**
ELECTRICAL DRIVE SYSTEM FOR A VEHICLE WITH SKID STEERING
SYSTEME D'ENTRAINEMENT ELECTRIQUE DESTINE A UN VEHICULE COMPORTANT UNE DIRECTION A GLISSEMENT

(30) Priorität: 26.09.2003 DE 10344711
(43) Veröffentlichungstag der Anmeldung: 07.06.2006
(73) Patentinhaber: ZF FRIEDRICHSHAFEN Aktiengesellschaft, 88038 Friedrichshafen (DE)
(72) Erfinder: SORG, Johannes, 88213 Ravensburg (DE)
(86) Internationale Anmeldenummer: PCT/EP2004/009614
(87) Internationale Veröffentlichungsnummer: WO 2005/039958

(56) Entgegenhaltungen:
- EP-A- 0 304 594
- DE-A- 3 833 784
- DE-A- 10 005 527
- US-A- 5 445 234

## Beschreibung

Die Erfindung betrifft ein elektrisches Antriebssystem für ein Fahrzeug mit Rutschlenkung nach dem Oberbegriff des Hauptanspruchs.

Fahrzeuge mit Rutschlenkung sind Kettenfahrzeuge oder Radfahrzeuge, bei denen zur Kurvenfahrt jeweils die kurveninnere Kette bzw. die kurveninneren Antriebsräder gegenüber der kurvenäußeren Kette bzw. den kurvenäußeren Antriebsrädern verlangsamt werden. Insbesondere bei schweren Kettenfahrzeugen bedarf es hierzu an der kurveninneren Kette erheblicher Bremsleistungen.

Es sind verschiedene Systeme bekannt, die es erlauben, diese Bremsleistung zu nutzen, indem sie der kurvenäußeren Kette zugeführt wird. Bei einem mechanischen oder hydrostatisch-mechanischen Überlagerungslenkgetriebe mit einem Lenkgetriebeteil und einem Fahrgetriebeteil, wie es in der DE 38 33 784 A1 offenbart ist, ist hierzu eine vom Lenkgetriebeteil angetriebene Null-Welle vorgesehen und der Leistungsaustausch von der kurveninneren Kette zur kurvenäußeren Kette erfolgt mechanisch über den Fahrgetriebeteil.

Bei der in der DE 100 05 527 A offenbarten dieselelektrischen Antriebsanlage ist jeder der beiden Ketten eine eigene elektrische Anriebsanlage zugeordnet, wobei keine mechanische Verbindung dazwischen besteht. Die Leistungsübertragung zwischen linker und rechter Seite erfolgt ausschließlich auf elektrischem Weg, was eine bauraumgünstige Anordnung der Antriebselemente erlaubt, allerdings eine entsprechend leistungsfähige elektrische Anlage und leistungsstarke elektrische Antriebsmaschinen erfordert.

Die EP 0 304 594 A zeigt ebenfalls eine dieselelektrische Antriebsanlage, welche darüber hinaus ein mechanisches Überlagerungslenkgetriebe aufweist. Für Fahr- und Lenkantrieb ist jeweils ein elektrischer Antriebsmotor verschiedener Baugröße vorgesehen. Bei dieser Antriebsanlage erfolgt die Leistungsübertragung zwischen der linken und der rechten Seite ausschließlich mechanisch. Diese bekannte Antriebsanlage ist jedoch sehr aufwendig und nicht optimal hinsichtlich Bauraum, da nicht nur ein Dieselmotor und ein komplexes mechanisches Überlagerungslenkgetriebe, sondern darüber hinaus noch ein leistungsstarker Generator und zwei elektrische Antriebsmaschinen benötigt werden. Bei Geradeausfahrt wird ausschließlich der Fahrantriebsmotor belastet, während die im Lenkantriebsmotor installierte Leistung nicht abgerufen wird.

Die WO 02/083483 A zeigt eine Antriebsanlage, bei der gleichartige elektrische Fahrantriebsmaschinen auf jeder Seite angeordnet sind und bei welcher darüber hinaus ein zentraler dritter Elektromotor als Lenkmotor vorgesehen ist. Schließlich zeigt die US 5,445,234 ein als nächstliegender Stand der Technik betrachtetes Antriebssystem für ein Fahrzeug mit Rutschlenkung. Dieses weist eine linke und eine gleichartige rechte elektrische Antriebsmaschine auf. Bei diesem elektrischen Antriebssystem dienen beide elektrische Antriebsmaschinen gleichzeitig sowohl als Fahr- als auch als Lenkantrieb. Die volle installierte elektrische Antriebsleistung steht für Geradeausfahrt zur Verfügung. Die Leistungsübertragung zwischen linker und rechter Seite erfolgt teilweise mechanisch und teilweise elektrisch.

Auf jeder Seite ist ein als Planetengetriebe ausgebildetes Summierungsgetriebe angeordnet. Die Planetenträger dieser beiden Summierungsgetriebe bilden die beiden Abtriebe, die auf die Gleisketten wirken. Das Sonnenrad des linken Summierungsgetriebes wird über eine Stirnradstufe von der linken Antriebsmaschine und das Sonnenrad des rechten Summierungsgetriebes über eine Stirnradstufe von der rechten Antriebsmaschine angetrieben. Die beiden Hohlräder des linken und rechten Summierungsgetriebes sind durch eine Verbindungswelle drehstarr miteinander verbunden. Außerdem ist zwischen dem Sonnenrad des linken Summierungsgetriebes und dem Sonnenrad des rechten Summierungsgetriebes ein Getriebezug angeordnet, der auch die beiden Antriebsmaschinen miteinander koppelt. Damit nun bei Kurvenfahrt die beiden Antriebsmaschinen mit unterschiedlichen Drehzahlen betrieben werden können, weist dieser Getriebezug mittig ein Differentialgetriebe auf.

Der Erfindung liegt die Aufgabe zugrunde, ein gattungsgemäßes Antriebssystem für ein Fahrzeug mit Rutschlenkung anzugeben, welches ohne ein solches mittiges Differentialgetriebe auskommt.

Ausgehend von einem gattungsgemäßen Antriebssystem erfolgt die Lösung dieser Aufgabe durch die im kennzeichnenden Teil des Hauptanspruchs angegebenen Merkmale. Jedes der beiden Summierungsgetriebe weist zwei Übertragungsglieder auf, welche nicht dem jeweiligen Abtrieb zugeordnet sind. Wird der Abtrieb durch den Planetenträger gebildet, sind diese beiden Übertragungsglieder also das Sonnenrad und das Hohlrad. Eines dieser Übertragungsglieder sei das "Erste" und das andere dieser Übertragungsglieder das "Zweite" genannt. Erfindungsgemäß ist das erste Übertragungsglied des linken Summierungsgetriebes, also das erste linke Übertragungsglied, durch einen ersten mechanischen Getriebezug trieblich direkt mit dem zweiten Übertragungsglied des rechten Summierungsgetriebes, also dem zweiten rechten Übertragungsglied, verbunden und das erste rechte Übertragungsglied ist durch einen zweiten mechanischen Getriebezug trieblich direkt mit dem zweiten linken Übertragungsglied verbunden. Die beiden Getriebezüge sind also jeweils zwischen verschiedenartigen Übertragungsgliedern der beiden Summierungsgetriebe kreuzweise miteinander trieblich direkt - also ohne ein Ausgleichselement wie ein Differentialgetriebe - verbunden.

Zwischen dem linken und dem rechten Summierungsgetriebe müssen lediglich zwei Wellen geführt werden, die nur wenig Bauraum einnehmen.

Die Begriffe "linke" und "rechte" Antriebsmaschine sind im Zusammenhang mit der Erfindung so zu verstehen, dass die "linke" Antriebsmaschine mit einem ersten Übertragungsglied des linken Summierungsgetriebes und die "rechte" Antriebsmaschine mit einem entsprechenden Übertragungsglied des rechten Summierungsgetriebes verbunden sind.
Die beiden Antriebsmaschinen müssen im Fahrzeug nicht notwendigerweise links und rechts einer Fahrzeugmitte angeordnet sein, sondern können, je nach Fahrzeugkonfiguration, auch beispielsweise mittig hintereinander oder mittig übereinander angeordnet sein.

Obgleich auch andere Bauformen verwendet werden können, ist es vorteilhaft, wenn jedes Summierungsgetriebe als Planetengetriebe ausgebildet ist mit mehreren Planetenrädern, die drehbar auf einem Planetenträger gelagert sind und in gleichzeitigem Eingriff mit einem Sonnenrad und einem Hohlrad stehen, wobei jeweils der Planetenträger das Abtriebsglied, das Hohlrad, das erste Übertragungsglied und das Sonnenrad das zweite Übertragungsglied bilden.

Bei einer vorteilhaften Ausgestaltung der Erfindung besteht der erste mechanische Getriebezug aus einem drehfest mit dem Hohlrad des linken Summierungsgetriebes verbundenen ersten Stirnrad, einem drehfest mit dem Sonnenrad des rechten Summierungsgetriebes verbundenen zweiten Stirnrad und einer Verbindungswelle, die an ihren Enden ein drittes und ein viertes Stirnrad aufweist, wobei das dritte mit dem ersten und das vierte mit dem zweiten Stirnrad in Eingriff steht. Entsprechend wird der zweite mechanische Getriebezug gebildet durch ein drehfest mit dem Hohlrad des rechten Summierungsgetriebes verbundenen fünften Stirnrad, einem drehfest mit dem Sonnenrad des linken Summierungsgetriebe verbundenen sechsten Stirnrad und einer zweiten Verbindungswelle, die an ihren Enden ein siebtes und ein achtes Stirnrad aufweist, wobei das siebte mit dem fünften und das achte mit dem sechsten Stirnrad in Eingriff steht. Zur besseren Energieausnutzung können zwischen der linken und der rechten elektrischen Antriebsmaschine elektrische Koppelmittel vorgesehen sein, welche zumindest in bestimmten Betriebszuständen elektrische Leistung von der als Generator wirkenden linken Antriebsmaschine zu der als Motor wirkenden rechten Antriebsmaschine leiten und umgekehrt.

Schließlich wird Schutz begehrt für ein Summierungsgetriebe, welches ausgebildet ist für ein erfindungsgemäßes elektrisches Antriebssystem.

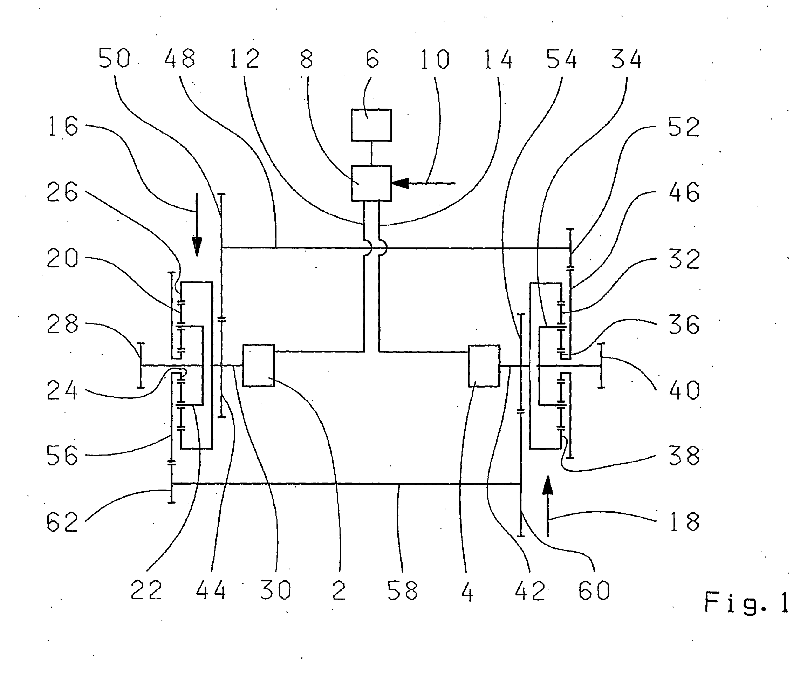

Die Erfindung wird anhand der beiliegenden Zeichnung näher erläutert, die schematisch ein erfindungsgemäßes elektrisches Antriebssystem für ein Fahrzeug mit Rutschlenkung zeigt. Darin ist mit 2 die linke und mit 4 die rechte elektrische Antriebsmaschine bezeichnet. Die elektrische Energiequelle 6 kann aus einer Kombination eines Dieselmotors mit einem elektrischen Generator bestehen oder auch aus einer Batterie oder Brennstoffzelle. Die elektronische Steuerungseinrichtung 8 umfaßt Steuerungshard- und -soft-ware sowie eine Leistungselektronik. Abhängig von Steuereingabesignalen 10, die der Fahrzeugführer durch Betätigung von nicht dargestellten Bedienungselementen erzeugt, werden an den beiden elektrischen Antriebsmaschinen 2, 4 über die Leitungen 12, 14, abhängig von den Steuereingangssignalen 10, entsprechende Drehzahlen eingesteuert. Das linke Summierungsgetriebe 16 weist mehrere Planetenräder 20 auf, die drehbar auf dem Planetenträger 22 gelagert sind. Die Planetenräder 20 sind in gleichzeitigem Eingriff mit dem Sonnenrad 24 und dem Hohlrad 26. Der Planetenträger 22 bildet das Abtriebsglied und ist über den Flansch 28 mit dem nicht dargstellten Stern eines Gleiskettenlaufwerks verbunden. Das Hohlrad 26 ist über die Welle 30 mit der linken Antriebsmaschine 2 verbunden. Beim gleichartigen rechten Summierungsgetriebe 18 sind die Planetenräder mit 32, der Planetenträger mit 34, das Sonnenrad mit 36, das Hohlrad mit 38 und der Abtriebsflansch mit 40 bezeichnet. Die Welle 42 verbindet die rechte Antriebsmaschine 4 mit dem Hohlrad 38.

Das Hohlrad 26 des linken Summierungsgetriebes ist trieblich direkt mit dem Sonnenrad 36 des rechten Summierungsgetriebes verbunden. Hierzu dient ein mechanischer Getriebezug, der gebildet wird durch das drehfest mit dem Hohlrad 26 verbundene Stirnrad 44, das drehfest mit dem Sonnenrad 36 des rechten Summierungsgetriebes 18 verbundene Stirnrad 46 und die Verbindungswelle 48, die an ihren Enden das Stirnrad 50 und das Stirnrad 52 aufweist. Das Stirnrad 50 ist mit dem Stirnrad 44 und das Stirnrad 52 mit dem Stirnrad 46 in ständigem Zahneingriff.

In entsprechender Weise ist das Hohlrad 38 des rechten Summierungsgetriebes trieblich direkt mit dem Sonnenrad 24 des linken Summierungsgetriebes verbunden. Der dazwischen angeordnete mechanische Getriebezug wird gebildet durch das drehfest mit dem Hohlrad 38 des rechten Summierungsgetriebes 18 verbundene Stirnrad 54, dem drehfest mit dem Sonnenrad 24 des linken Summierungsgetriebes 16 verbundene Stirnrad 56 und der Verbindungswelle 58, die an ihren Enden das Stirnrad 60 und das Stirnrad 62 aufweist. Das Stirnrad 60 ist mit dem Stirnrad 54 und das Stirnrad 62 mit dem Stirnrad 56 in ständigem Zahneingriff.

Bei Geradeausfahrt wird der größte Teil der Antriebsleistung jeder elektrischen Antriebsmaschine 2, 4 auf den jeweils zugeordneten Abtriebsflansch 28, 40 übertragen. Zu einem gewissen Teil treibt jedoch auch die linke elektrische Antriebsmaschine die rechte Kette und die rechte elektrische Antriebsmaschine die linke Kette. Bei Kurvenfahrt fließt mehr Leistung von dem kurveninneren Antriebsmotor zum kurvenäußeren Abtriebsflansch als umgekehrt, so dass ein mechanischer Netto-Leistungsfluß zur kurvenäußeren Gleiskette vorliegt. Darüber hinaus kann über die Leitungen 12, 14 auch elektrische Leistung von der kurveninneren Antriebsmaschine zur kurvenäußeren Antriebsmaschine geleitet werden.

Der Bereich der Fahrzeugkabine in der Mitte des Fahrzeugs bleibt weitgehend frei von Antriebselementen, da lediglich die beiden Verbindungswellen 48, 58 dort verlaufen. Die beiden Verbindungswellen können auf gegenüberliegenden Seiten einer Mittelachse der Summierungsgetriebe angeordnet sein oder aber auch mit dieser Mittelachse einen kleineren Winkel als 180° einschließen, je nach den Erfordernissen der Fahrzeugkonfiguration.

### Bezugszeichen

- 2: elektrische Antriebsmaschine
- 4: elektrische Antriebsmaschine
- 6.: Energiequelle
- 8: Steuerungseinrichtung
- 10: Steuerungseingabesignal
- 12: Leitung
- 14: Leitung
- 16: Summierungsgetriebe
- 18: Summierungsgetriebe
- 20: Planetenrad
- 22: Planetenträger
- 24: Sonnenrad
- 26: Hohlrad
- 28: Abtriebsflansch
- 30: Welle
- 32: Planetenrad
- 34: Planetenträger
- 36: Sonnenrad
- 38: Hohlrad
- 40: Abtriebsflansch
- 42: Welle
- 44: Stirnrad
- 46: Stirnrad
- 48: Verbindungswelle
- 50: Stirnrad
- 52: Stirnrad
- 54: Stirnrad
- 56: Stirnrad
- 58: Verbindungswelle .
- 60: Stirnrad
- 62: Stirnrad

## Patentansprüche

1. Elektrisches Antriebssystem für ein Fahrzeug mit Rutschlenkung mit
- mindestens einer linken und einer gleichartigen rechten elektrischen Antriebsmaschine (2, 4),
- einer elektrischen Energiequelle (6),
- einer elektronischen Steuerungseinrichtung (8) zur unabhängigen Einsteuerung von Drehzahlen an der linken und rechten Antriebsmaschine (2, 4),
- einem linken Summierungsgetriebe (16), das ein mit einem linken Antriebsrad oder einer linken Gleiskette verbundenes linkes Abtriebsglied (22, 28), ein mit der linken Antriebsmaschine (2) verbundenes erstes linkes Übertragungsglied (26) und ein zweites linkes Übertragungsglied (24) umfaßt,
- einem gleichartigen rechten Summierungsgetriebe (18), das ein mit einem rechten Antriebsrad oder einer rechten Gleiskette verbundenes rechtes Abtriebsglied (34, 40), ein mit der rechten Antriebsmaschine (4) verbundenes erstes rechtes Übertragungsglied (38) und ein zweites rechtes Übertragungsglied (36) umfaßt,
**dadurch gekennzeichnet, dass** das erste linke Übertragungsglied (26) durch einen ersten mechanischen Getriebezug (44, 50; 48, 52; 46) trieblich direkt mit dem zweiten rechten Übertragungsglied (36) verbunden ist, und dass das erste rechte Übertragungsglied (38) durch einen zweiten mechanischen Getriebezug (54, 60; 58, 62; 56) trieblich direkt mit dem zweiten linken Übertragungsglied (24) verbunden ist.

2. Antriebssystem nach Anspruch 1, **dadurch gekennzeichnet, dass** jedes Summierungsgetriebe (16, 18) als Planetengetriebe ausgebildet ist mit mehreren Planetenrädern (20, 32), die drehbar auf einem Planetenträger (22, 34) gelagert sind und in gleichzeitigem Eingriff mit einem Sonnenrad (24, 36) und einem Hohlrad (26, 38) stehen, wobei jeweils der Planetenträger (22, 34) das Abtriebsglied, das Hohlrad (26, 38) das erste Übertragungsglied und das Sonnenrad (24, 36) das zweite Übertragungsglied bilden.

3. Antriebssystem nach Anspruch 2, **dadurch gekennzeichnet, dass** der erste mechanische Getriebezug gebildet wird durch ein drehfest mit dem Hohlrad (26) des linken Summierungsgetriebes (16) verbundenes erstes Stirnrad (44), ein drehfest mit dem Sonnenrad (36) des rechten Summierungsgetriebes (18) verbundenes zweites Stirnrad (46) und eine erste Verbindungswelle (48), die an ihren Enden ein drittes und ein viertes Stirnrad (50, 52) aufweist, wobei das dritte (50) mit dem ersten (44) und das vierte (52) mit dem zweiten (46) Stirnrad in Eingriff stehen, und dass der zweite mechanische Getriebezug gebildet wird durch ein drehfest mit dem Hohlrad (38) des rechten Summierungsgetriebes (18) verbundenes fünftes Stirnrad (54), ein drehfest mit dem Sonnenrad (24) des linken Summierungsgetriebes (16) verbundenes sechstes Stirnrad (56) und eine zweite Verbindungswelle (58), die an ihren Enden ein siebtes (60) und ein achtes (62) Stirnrad aufweisen, wobei das siebte (60) mit dem fünften (54) und das achte (62) mit dem sechsten (56) in Eingriff stehen.

4. Antriebssystem nach einem der Ansprüche 1 bis 3, **dadurch gekennzeichnet, dass** zwischen der linken und der rechten elektrischen Antriebsmaschine (2, 4) elektrische Koppelmittel (8, 12, 14) vorgesehen sind, welche, zumindest in bestimmten Betriebszuständen, elektrische Leistung von der als Generator wirkenden linken Antriebsmaschine (2) zu der als Motor wirkenden rechten Antriebsmaschine (4) leiten und umgekehrt.

5. Summierungsgetriebe (16, 18), ausgebildet für ein elektrisches Antriebssystem nach einem der vorhergehenden Ansprüche.

## Claims

1. Electric drive system for a vehicle with slip steering, with
- at least a left-hand and a right-hand electric drive motor (2, 4) of the same type,
- an electric power source (6),
- an electronic control system (8) for independently activating speeds at the left-hand and right-hand drive motors (2, 4),
- a left-hand summing gear (16), comprising a left-hand output member (22, 28) connected to a left-hand driving wheel or a left-hand track, a first left-hand transmission member (26) and a second left-hand transmission member (24) connected to the left-hand drive motor (2),
- a right-hand summing gear (18) of the same type, comprising a right-hand output member (34, 40) connected to a right-hand driving wheel or a right-hand track, a first right-hand transmission member (38) and a second right-hand transmission member (36) connected to the right-hand drive motor (4),
**characterised in that** the first left-hand transmission member (26) is directly connected to the second right-hand transmission member (36) in a driving relationship by means of a first mechanical gear train (44, 50; 48, 52; 46), and the first right-hand transmission member (38) is directly connected to the second left-hand transmission member (24) in a driving relationship by means of a second mechanical gear train (54, 60; 58, 62; 56).

2. Drive system as claimed in claim 1,
**characterised in that** each summing gear (16, 18) is provided in the form of a planetary gear with several planet gears (20, 32) which are mounted so as to be rotatable on a planet carrier (22, 34) and simultaneously mesh with a sun gear (24, 36) and an annulus (26, 38), and the planet carrier (22, 34) constitutes the output member, the annulus (26, 38) constitutes the first transmission member and the sun gear (24, 36) constitutes the second transmission member respectively.

3. Drive system as claimed in claim 2,
**characterised in that** the first mechanical gear train comprises a first spur gear (44) connected to the annulus (26) of the left-hand summing gear (16) so as to rotate in unison with it, a second spur gear (46) connected to the sun gear (36) of the right-hand summing gear (18) so as to rotate in unison with it, and a first connecting shaft (48) with a third and a fourth spur gear (50, 52) at its ends, whereby the third spur gear (50) meshes with the first spur gear (44) and the fourth spur gear (52) meshes with the second spur gear (46), and the second mechanical gear train comprises a fifth spur gear (54) connected to the annulus (38) of the right-hand summing gear (18) so as to rotate in unison with it, a sixth spur gear (56) connected to the sun gear (24) of the left-hand summing gear (16) so as to rotate in unison with it, and a second connecting shaft (58) with a seventh spur gear (60) and an eighth spur gear (62) at its ends, whereby the seventh spur gear (60) meshes with the fifth spur gear (54) and the eighth spur gear (62) meshes with the sixth spur gear (56).

4. Drive system as claimed in one of claims 1 to 3, **characterised in that** electric coupling means (8, 12, 14) are provided between the left-hand and the right-hand electric drive motors (2, 4) which direct electric power from the left-hand drive motor (2) acting as a generator to the right-hand drive motor (4) acting as a motor, at least in certain operating modes, and vice versa.

5. Summing gear (16, 18) designed for an electric drive system as claimed in one of the preceding claims.

## Revendications

1. Système de propulsion électrique pour un véhicule à direction par dérapage comportant
- au moins un moteur de propulsion électrique gauche et un moteur de propulsion électrique droit du même type (2, 4),
- une source d'énergie électrique (6),
- un dispositif de commande électronique (8) destiné à commander indépendamment les vitesses de rotation des moteurs de propulsion gauche et droit (2, 4),
- un mécanisme d'addition gauche (16) qui comprend un organe de sortie gauche (22, 28) relié à une roue motrice gauche ou à une chenille gauche, un premier organe de transmission gauche (26) relié au moteur de propulsion gauche (2) et un second organe de transmission gauche (24),
- un mécanisme d'addition droit (18) du même type qui comprend un organe de sortie droit (34, 40) relié à une roue motrice droite ou à une chenille droite, un premier organe de transmission droit (38) relié au moteur de propulsion droit (4) et un second organe de transmission droit (36),
**caractérisé en ce que** le premier organe de transmission gauche (26) est relié cinématiquement directement au second organe de transmission droit (36) par une première chaîne cinématique mécanique (44, 50; 48, 52; 46), et **en ce que** le premier organe de transmission droit (38) est relié cinématiquement directement au second organe de transmission gauche (24) par une seconde chaîne cinématique mécanique (54, 60; 58, 62; 56).

2. Système de propulsion selon la revendication 1, **caractérisé en ce que** chaque mécanisme additionneur (16, 18) est constitué par un train épicycloïdal comportant plusieurs pignons satellites (20, 32) qui sont montés rotatifs sur un porte-satellites (22, 34) et sont simultanément en prise avec une roue planétaire (24, 36) et avec une couronne à denture intérieure (26, 38), dans chaque cas, le porte-satellites (22, 34) constituant l'organe de sortie, la couronne à denture intérieure (26, 38) constituant le premier organe de transmission et la roue planétaire (24, 36) constituant le second organe de transmission.

3. Système de propulsion selon la revendication 2, **caractérisé en ce que** la première chaîne cinématique mécanique est formée d'une première roue droite (44) reliée solidairement en rotation à la couronne à denture intérieure (26) du mécanisme additionneur gauche (16), d'une deuxième roue droite (46) reliée solidairement en rotation à la roue planétaire (36) du mécanisme additionneur droit (18) et d'un premier arbre de liaison (48) qui comporte à ses extrémités une troisième et une quatrième roues droites (50, 52), la troisième roue droite (50) étant en prise avec la première roue droite (44) et la quatrième roue droite (52) étant en prise avec la deuxième roue droite (46), et **en ce que** la seconde chaîne cinématique mécanique est formée d'une cinquième roue droite (54) reliée solidairement en rotation à la couronne à denture intérieure (38) du mécanisme additionneur droit (18), d'une sixième roue droite (56) reliée solidairement en rotation à la roue planétaire (24) du mécanisme additionneur gauche (16), et d'un second arbre de liaison (58) qui comporte à ses extrémités une septième roue droite (60) et une huitième roue droite (62), la septième roue droite (60) étant en prise avec la cinquième roue droite (54) et la huitième roue droite (62) étant en prise avec la sixième roue droite (56).

4. Système de propulsion selon l'une des revendications 1 à 3, **caractérisé en ce que**, entre les moteurs de propulsion électriques gauche et droit (2, 4), sont prévus des moyens de couplage électriques (8, 12, 14) qui, du moins dans certains états de fonctionnement, conduisent la puissance électrique du moteur de propulsion gauche (2) travaillant en génératrice au moteur de propulsion droit (4) qui travaille en moteur, et inversement.

5. Mécanisme additionneur (16, 18) réalisé pour un système de propulsion électrique selon l'une des revendications précédentes
